# EUROPEAN PATENT APPLICATION

(11) **EP 4 250 824 A1**
(43) Date of publication of application: **27.09.2023**
(21) Application number: 20967861.4
(22) Date of filing: 31.12.2020
(51) Int. Cl.: H04W 48/16, H04W 76/16

(54) **INFORMATION REPORTING METHOD AND RELATED DEVICE**

(71) Applicant: Huawei Technologies Co., Ltd., Shenzhen, Guangdong 518129 (CN)
(72) Inventor: CHANG, Junren, Shenzhen, Guangdong 518129 (CN); WANG, Lingping, Shenzhen, Guangdong 518129 (CN); HAN, Lei, Shenzhen, Guangdong 518129 (CN)
(74) Representative: Gill Jennings & Every LLP
(86) International application number: PCT/CN2020/142421
(87) International publication number: WO 2022/141523

(57) **Abstract**

This application discloses an information reporting method and a related apparatus. The information reporting method includes: A terminal device receives a capability enquiry message from a first network device, and obtains first release information of a second network device. The terminal device determines first capability information of the terminal device based on the first release information. The terminal device sends the first capability information to the first network device. Thus, the first network device may send the first capability information to the second network device. The second network device receives the first capability information, and parses the first capability information. Because the first capability information is determined by the first release information of the second network device, compatibility problems caused by capability misalignment between the terminal device and the second network device are avoided, compatibility between the terminal device and the network device is improved, and communication efficiency is improved.

## Description

### TECHNICAL FIELD

This application relates to the field of communication technologies, and in particular, to an information reporting method and a related apparatus.

### BACKGROUND

Traditional network configuration and communication process management are network-centered, and a network controls configuration of most parameters. Generally, after a problem occurs in a process of communication between a terminal device (user equipment, UE) and a network, a terminal vendor usually relies on traversing various possible problems to locate and resolve the problem, which is time consuming. However, many problems are caused by network compatibility problems in practice.

After a network problem occurs on UE, it is difficult for the UE to predict whether the problem is caused by a network compatibility problem. Therefore, a terminal vendor usually needs to spend a large amount of time in locating the problem. At present, the UE usually locates a problem by attempting to reduce a capability of the UE. However, in a case in which the UE autonomously reduces the capability of the UE, the UE does not have any reference information, and can perform only an empirical attempt. The UE performs an empirical attempt, and cannot perform targeted processing, resulting in low processing efficiency. To ensure service performance, the UE usually needs to perform many attempts of UE capability reduction to ensure normal access or registration. Even if the UE accesses the network in this manner, performance of a service that can be obtained by the UE is reduced, and communication efficiency is low.

### SUMMARY

This application provides an information reporting method and a related apparatus, to improve communication efficiency.

According to a first aspect, this application provides an information reporting method, including: A terminal device receives a capability enquiry message from a first network device, and obtains first release information of a second network device. The terminal device determines first capability information of the terminal device based on the first release information. The terminal device sends the first capability information to the first network device.

In the foregoing method, the terminal device obtains the first release information of the second network device, determines the first capability information of the terminal device based on the first release information, and then sends the first capability information to the first network device. In this way, the first network device may send the first capability information to the second network device. The second network device receives the first capability information, and parses the first capability information. Because the first capability information is determined based on the first release information of the second network device, compatibility problems caused by capability misalignment between the terminal device and the second network device are avoided, compatibility between the terminal device and the network device is improved, and communication efficiency is improved.

With reference to the first aspect, in a possible implementation of the first aspect, the obtaining first release information of a second network device includes: obtaining the first release information from the capability enquiry message, where the capability enquiry message includes the first release information.

With reference to the first aspect, in a possible implementation of the first aspect, the obtaining first release information of a second network device includes: obtaining the first release information from a first message; where the capability enquiry message carries first indication information, and the first indication information indicates the terminal device to determine the first capability information based on the first release information.

With reference to the first aspect, in a possible implementation of the first aspect, the first message is a neighbor measurement configuration message, the neighbor measurement configuration message carries the first release information, and the neighbor measurement configuration message comes from the first network device; or the first message is a first system broadcast message, the first system broadcast message carries the first release information, and the first system broadcast message comes from the second network device; or the first message is a second system broadcast message, the second system broadcast message carries release information supported by the second network device, the second system broadcast message comes from the second network device, and the first release is one of releases supported by the second network device.

With reference to the first aspect, in a possible implementation of the first aspect, the first capability information further includes second release information supported by the terminal device, the second release is later than the first release, and a capability corresponding to the second release information is related to a secondary station.

With reference to the first aspect, in a possible implementation of the first aspect, the method further includes: The terminal device sends a neighbor cell measurement result to the first network device, where the neighbor cell measurement result includes the first release information.

With reference to the first aspect, in a possible implementation of the first aspect, the method further includes: The terminal device obtains third release information of the first network device. The terminal device determines second capability information of the terminal device based on the third release information. The terminal device sends the second capability information to the first network device.

With reference to the first aspect, in a possible implementation of the first aspect, the method further includes: The terminal device obtains third release information of the first network device. The terminal device determines third capability information of the terminal device based on the first release information and the third release information. The terminal device sends the third capability information to the first network device.

According to a second aspect, this application provides an information reporting method, including: A first network device sends a capability enquiry message to a terminal device. The first network device receives first capability information sent by the terminal device, where the first capability information is determined based on first release information of a second network device, and the first capability information is related to the second network device. The first network device sends the first capability information to the second network device.

In the foregoing method, the first network device receives the first capability information sent by the terminal device, where the first capability information is determined based on the first release information of the second network device. Then, the first network device sends the first capability information to the second network device. In this way, the second network device receives the first capability information, and parses the first capability information. Because the first capability information is determined based on the first release information of the second network device, and the first capability information is related to the second network device, compatibility problems caused by capability misalignment between the terminal device and the second network device are avoided, compatibility between the terminal device and the network device is improved, and communication efficiency is improved.

With reference to the second aspect, in a possible implementation of the second aspect, the capability enquiry message includes the first release information.

With reference to the second aspect, in a possible implementation of the second aspect, the first release information is transmitted via a first message. The capability enquiry message carries first indication information, and the first indication information indicates the terminal device to determine the first capability information based on the first release information.

With reference to the second aspect, in a possible implementation of the second aspect, the first message is a neighbor measurement configuration message, the neighbor measurement configuration message carries the first release information, and the neighbor measurement configuration message comes from the first network device; or the first message is a first system broadcast message, the first system broadcast message carries the first release information, and the first system broadcast message comes from the second network device; or the first message is a second system broadcast message, the second system broadcast message carries release information supported by the second network device, the second system broadcast message comes from the second network device, and the first release is one of releases supported by the second network device.

With reference to the second aspect, in a possible implementation of the second aspect, the first capability information further includes second release information supported by the terminal device, the second release is later than the first release, and a capability corresponding to the second release information is related to a secondary station.

With reference to the second aspect, in a possible implementation of the second aspect, the method further includes: The first network device receives a neighbor cell measurement result sent by the terminal device, where the neighbor cell measurement result includes the first release information.

With reference to the second aspect, in a possible implementation of the second aspect, the method further includes: The first network device receives second capability information sent by the terminal device, where the second capability information is determined based on third release information of the first network device.

With reference to the second aspect, in a possible implementation of the second aspect, the method further includes: The first network device receives third capability information sent by the terminal device, where the third capability information is determined based on the first release information and third release information of the first network device.

According to a third aspect, this application provides an information reporting method, including: A second network device receives capability information that is supported by a terminal device and that is sent by a first network device. The second network device parses the capability information that is supported by the terminal device. The second network device sends a second message to the first network device, where the second message includes fourth release information of the second network device, the second message indicates the first network device to send a third message to the terminal device, and the third message includes the fourth release information.

In the foregoing method, the second network device receives the capability information that is supported by the terminal device, and parses the capability information that is supported by the terminal device. The first network device sends the third message to the terminal device, where the third message includes the fourth release information of the second network device. In this way, when the second network device successfully parses the capability information that is supported by the terminal device, the terminal device establishes a communication connection to the second network device based on the fourth release information; and when the parsing fails, the terminal device determines the fourth capability information based on the fourth release information, and reports the fourth capability information to the second network device. Because the fourth capability information is determined based on the fourth release information of the second network device, compatibility problems caused by capability misalignment between the terminal device and the second network device are avoided, compatibility between the terminal device and the network device is improved, and communication efficiency is improved.

With reference to the third aspect, in a possible implementation of the third aspect, when the second network device successfully parses the capability information that is supported by the terminal device, the third message indicates the terminal device to establish a connection to the second network device based on the fourth release information.

With reference to the third aspect, in a possible implementation of the third aspect, when the second network device fails to parse the capability information that is supported by the terminal device, the third message indicates the terminal device to determine fourth capability information based on the fourth release information.

According to a fourth aspect, this application provides a communication apparatus. The communication apparatus is used in a terminal device and includes a transceiver module and a processing module. The transceiver module is configured to receive a capability enquiry message from a first network device. The processing module is configured to: obtain first release information of a second network device, and determine first capability information of the terminal device based on the first release information. The transceiver module is further configured to send the first capability information to the first network device.

With reference to the fourth aspect, in a possible implementation of the fourth aspect, the processing module is specifically configured to: obtain the first release information from the capability enquiry message, where the capability enquiry message includes the first release information.

With reference to the fourth aspect, in a possible implementation of the fourth aspect, the processing module is specifically configured to: obtain the first release information from a first message; where the capability enquiry message carries first indication information, and the first indication information indicates the terminal device to determine the first capability information based on the first release information.

With reference to the fourth aspect, in a possible implementation of the fourth aspect, the first message is a neighbor measurement configuration message, the neighbor measurement configuration message carries the first release information, and the neighbor measurement configuration message comes from the first network device; or the first message is a first system broadcast message, the first system broadcast message carries the first release information, and the first system broadcast message comes from the second network device; or the first message is a second system broadcast message, the second system broadcast message carries release information supported by the second network device, the second system broadcast message comes from the second network device, and the first release is one of releases supported by the second network device.

With reference to the fourth aspect, in a possible implementation of the fourth aspect, the first capability information further includes second release information supported by the terminal device, the second release is later than the first release, and a capability corresponding to the second release information is related to a secondary station.

With reference to the fourth aspect, in a possible implementation of the fourth aspect, the transceiver module is further configured to send a neighbor cell measurement result to the first network device, where the neighbor cell measurement result includes the first release information.

With reference to the fourth aspect, in a possible implementation of the fourth aspect, the processing module is further configured to obtain third release information of the first network device; and determine second capability information of the terminal device based on the third release information. The transceiver module is further configured to send the second capability information to the first network device.

With reference to the fourth aspect, in a possible implementation of the fourth aspect, the processing module is further configured to obtain third release information of the first network device; and determine third capability information of the terminal device based on the first release information and the third release information. The transceiver module is further configured to send the third capability information to the first network device.

According to a fifth aspect, this application provides a communication apparatus. The communication apparatus is used in a first network device and includes a transceiver module, and the transceiver module is configured to: send a capability enquiry message to a terminal device; receive first capability information sent by the terminal device, where the first capability information is determined based on first release information of a second network device, and the first capability information is related to the second network device; and send the first capability information to the second network device.

With reference to the fifth aspect, in a possible implementation of the fifth aspect, the capability enquiry message includes the first release information.

With reference to the fifth aspect, in a possible implementation of the fifth aspect, the first release information is transmitted via a first message. The capability enquiry message carries first indication information, and the first indication information indicates the terminal device to determine the first capability information based on the first release information.

With reference to the fifth aspect, in a possible implementation of the fifth aspect, the first message is a neighbor measurement configuration message, the neighbor measurement configuration message carries the first release information, and the neighbor measurement configuration message comes from the first network device; or the first message is a first system broadcast message, the first system broadcast message carries the first release information, and the first system broadcast message comes from the second network device; or the first message is a second system broadcast message, the second system broadcast message carries release information supported by the second network device, the second system broadcast message comes from the second network device, and the first release is one of releases supported by the second network device.

With reference to the fifth aspect, in a possible implementation of the fifth aspect, the first capability information further includes second release information supported by the terminal device, the second release is later than the first release, and a capability corresponding to the second release information is related to a secondary station.

With reference to the fifth aspect, in a possible implementation of the fifth aspect, the transceiver module is further configured to receive a neighbor cell measurement result sent by the terminal device, where the neighbor cell measurement result includes the first release information.

With reference to the fifth aspect, in a possible implementation of the fifth aspect, the transceiver module is further configured to: receive second capability information sent by the terminal device, where the second capability information is determined based on third release information of the first network device.

With reference to the fifth aspect, in a possible implementation of the fifth aspect, the transceiver module is further configured to: receive third capability information sent by the terminal device, where the third capability information is determined based on the first release information and third release information of the first network device.

According to a sixth aspect, this application provides a communication apparatus. The communication apparatus is used in a second network device and includes a transceiver module and a processing module. The transceiver module is configured to receive capability information that is supported by a terminal device and that is sent by a first network device. The processing module is configured to parse the capability information that is supported by the terminal device. The transceiver module is further configured to send a second message to the first network device, where the second message includes fourth release information of the second network device, the second message indicates the first network device to send a third message to the terminal device, and the third message includes the fourth release information.

With reference to the sixth aspect, in a possible implementation of the sixth aspect, when the second network device successfully parses the capability information that is supported by the terminal device, the third message indicates the terminal device to establish a connection to the second network device based on the fourth release information.

With reference to the sixth aspect, in a possible implementation of the sixth aspect, when the second network device fails to parse the capability information that is supported by the terminal device, the third message indicates the terminal device to determine fourth capability information based on the fourth release information.

According to a seventh aspect, this application provides a communication apparatus, including a memory, a processor, and a program that is stored in the memory and that is executable on the processor, and when executing the program, the processor implements the method according to the first aspect or any one of the possible implementations of the first aspect. Optionally, the communication apparatus may be a chip.

According to an eighth aspect, this application provides a computer-readable storage medium. The computer-readable storage medium stores a computer program, and the computer program includes program instructions; and when being executed by a processor, the program instructions enable the processor to perform the method according to the first aspect or any one of the possible implementations of the first aspect.

According to a ninth aspect, this application provides a communication apparatus, including a memory, a processor, and a program that is stored in the memory and that is executable on the processor. When executing the program, the processor implements the method according to the second aspect or any one of the possible implementations of the second aspect. Optionally, the communication apparatus may be a chip.

According to a tenth aspect, this application provides a computer-readable storage medium. The computer-readable storage medium stores a computer program, the computer program includes program instructions, and when being executed by a processor, the program instructions enable the processor to perform the method according to the second aspect or any one of the possible implementations of the second aspect.

According to an eleventh aspect, this application provides a communication apparatus, including a memory, a processor, and a program that is stored in the memory and that is executable on the processor. When executing the program, the processor implements the method according to the third aspect or any one of the possible implementations of the third aspect. Optionally, the communication apparatus may be a chip.

According to a twelfth aspect, this application provides a computer-readable storage medium. The computer-readable storage medium stores a computer program, the computer program includes program instructions, and when being executed by a processor, the program instructions enable the processor to perform the method according to the third aspect or any one of the possible implementations of the third aspect.

According to a thirteenth aspect, this application provides a communication system. The communication system includes the communication apparatus according to the fourth aspect, the fifth aspect, and the sixth aspect, or the communication apparatus according to the seventh aspect, the ninth aspect, and the eleventh aspect.

### BRIEF DESCRIPTION OF DRAWINGS

FIG. 1 is a schematic diagram of a network system to which an embodiment of this application can be applied;
FIG. 2 is a schematic diagram of an information reporting method according to an embodiment of this application;
FIG. 3 is a schematic diagram of another information reporting method according to an embodiment of this application;
FIG. 4 is a schematic diagram of another information reporting method according to an embodiment of this application;
FIG. 5 is a schematic diagram of another information reporting method according to an embodiment of this application;
FIG. 6 is a schematic diagram of another information reporting method according to an embodiment of this application;
FIG. 7 is a schematic diagram of another information reporting method according to an embodiment of this application;
FIG. 8 is a schematic diagram of a communication apparatus according to an embodiment of this application;
FIG. 9 is a schematic diagram of another communication apparatus according to an embodiment of this application;
FIG. 10 is a schematic diagram of another communication apparatus according to an embodiment of this application;
FIG. 11 is a schematic diagram of another communication apparatus according to an embodiment of this application;
FIG. 12 is a schematic diagram of another communication apparatus according to an embodiment of this application;
FIG. 13 is a schematic diagram of another communication apparatus according to an embodiment of this application; and
FIG. 14 is a schematic structural diagram of a communication chip according to an embodiment of this application.

### DESCRIPTION OF EMBODIMENTS

The following describes technical solutions of this application with reference to the accompanying drawings.

The following describes some terms in embodiments of this application, to facilitate understanding of a person skilled in the art.

It should be understood that the technical solutions in embodiments of this application may be applied to a 5G communication system, or may be applied to a long term evolution (long term evolution, LTE) architecture, a universal mobile telecommunications system (universal mobile telecommunications system, UMTS), a terrestrial radio access network (UMTS terrestrial radio access network, UTRAN) architecture, or a radio access network for a global system for mobile communication (global system for mobile communication, GSM)/enhanced data rate for GSM evolution (enhanced data rate for GSM evolution, EDGE) system (GSM EDGE radio access network, GERAN) architecture. In the UTRAN architecture or the GERAN architecture, functions of the MME are performed by a serving general packet radio service (general packet radio service, GPRS) support node (serving GPRS support node, SGSN), and functions of the SGW/PGW are performed by a gateway GPRS support node (gateway GPRS support node, GGSN). The technical solutions in the embodiments of this application may be further applied to another communication system, for example, a public land mobile network (public land mobile network, PLMN) system, or even a communication system after 5G. This is not limited in the embodiments of this application.

Embodiments of this application relate to a terminal device. The terminal device includes a terminal device in a 5G network, and further includes a device that provides voice and/or data connectivity for a user. For example, the terminal device may include a hand-held device with a wireless connection function or a processing device connected to a wireless modem. The terminal device may communicate with a core network via a radio access network (radio access network, RAN), and exchange voice and/or data with the RAN. The terminal device may include user equipment (user equipment, UE), a wireless terminal device, a mobile terminal device, a device-to-device communication (device-to-device, D2D) terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, loT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent) or a user device (user device), etc. For example, the terminal device may include a mobile phone (or referred to as a "cellular" phone), a computer with a mobile terminal device, a portable, pocket-sized, handheld, or a computer-built-in mobile device. For example, the terminal device may be a device, such as a personal communications service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, a radio frequency identification (radio frequency identification, RFID), a sensor, a global positioning system (global positioning system, GPS) and a laser scanner, or a terminal device in a network after 5G. This is not limited in embodiments of this application.

As an example instead of a limitation, in embodiments of this application, the terminal device may alternatively be a wearable device. The wearable device may also be referred to as a wearable intelligent device, an intelligent wearable device, or the like, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without relying on smartphones, and are, for example, smartwatches or smart glasses; and devices that focus on only one type of application function and need to be used with other devices such as smartphones, and are, for example, various smart bands, smart helmets, or smart jewelry for physical sign monitoring.

However, if the various terminal devices described above are located in a vehicle (for example, placed in the vehicle or mounted in the vehicle), the terminal devices can be considered as vehicle-mounted terminal devices. For example, the vehicle-mounted terminal devices are also referred to as on-board units (on-board unit, OBU).

Embodiments of this application further relate to a first network device. The first network device may be a device configured to communicate with the terminal device. For example, the first network device may be a network side device in a 5G network, a base transceiver station (base transceiver station, BTS) in a GSM system or a CDMA system, a NodeB (NodeB, NB) in a WCDMA system, or an evolved NodeB (evolutional Node B, eNB or eNodeB) in an LTE system. Alternatively, the first network device may be a relay station, an access point, a vehicle-mounted device, a wearable device, a network side device in a network after 5G, a network device in a future evolved PLMN network, or the like.

Embodiments of this application further relate to a second network device. The second network device may be a device configured to communicate with the terminal device. For example, the second network device may be a network side device in a 5G network, a base station in a GSM system or a CDMA system, a base station in a WCDMA system, or an evolved NodeB in an LTE system. Alternatively, the second network device may be a relay station, an access point, a vehicle-mounted device, a wearable device, a network side device in a network after 5G, a network device in a future evolved PLMN network, or the like.

In the embodiments of this application, "at least one" refers to one or more, and "a plurality of" refers to two or more. The term "and/or" describes an association relationship between associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be one or more.

In addition, unless otherwise specified, ordinal numbers such as "first" and "second" mentioned in embodiments of this application are for distinguishing between a plurality of objects, but are not intended to limit an order, a time sequence, priorities, or importance of the plurality of objects. For example, first information and second information are merely used to distinguish between different information, but do not indicate that the two types of information are different in content, priorities, sending sequences, importance, or the like.

For ease of understanding of this application, concepts in this application are first explained.

UE capability information: The UE capability information includes radio capability information and core network capability information, and the radio capability information includes the network standards and frequency bands supported by the UE. The UE reports its own UE capability information to a base station, and the base station buffers the UE capability information and sends the UE capability information to a core network. When the UE needs to perform a handover (handover, HO), circuit switched fallback (circuit switched fallback, CSFB), or carrier aggregation, the base station attempts to parse the UE capability information.

Fifth generation (fifth generation, 5G) new radio (new radio, NR) system: In a 5G NR system, a 5G network becomes increasingly complex. Network configuration and communication process management are network-centered, and the network controls the configuration of most or all parameters. Generally, after a problem occurs in a process of communication between a terminal and the network, a terminal vendor usually relies on traversing various possible problems to locate and resolve the problem, which is time consuming. However, many problems are caused by network compatibility problems in practice. For example, in the process of communication between the terminal and the network, problems such as an access failure or a registration failure often occur. In some scenarios, the access failure or registration failure is caused by the capability or processing capability of the network. Before the problem is correctly located, it cannot be predicted whether the problem is caused by the communication compatibility problem of the network. Therefore, the problem is usually resolved with low efficiency.

Some of the network compatibility problems are listed below.
1. When the UE accesses the network, the base station fails to parse the UE capability information because the protocol release of the UE is later/larger than that of the base station. As a result, the UE fails to access the network.
2. When the UE performs a handover, the base station has a low storage and processing capability. The UE capability information exceeds the limit of the base station, and the release of the base station is not aligned with the UE capability information. As a result, the base station fails to parse the UE capability information, resulting in a handover failure.
3. When the UE performs CSFB, a field of the UE capability information is too long, but the buffer capability of the base station is too small, and the UE capability information exceeds the parsing capability of the base station. As a result, the base station fails to parse the UE capability information, resulting in a CSFB failure.
4. When the UE accesses the network, because a size of the UE capability information exceeds a system specification, a mobility management entity (mobility management entity, MME) has a limited capability and does not store the UE capability information. As a result, a UE capability enquiry needs to be performed when the UE accesses the network. This results in frequent capability enquiries.

Dual connectivity: A third generation partnership project (third generation partnership project, 3GPP) release (release, R) 15 defines a dual connectivity (dual connectivity, DC) framework for LTE and NR, including an evolved universal terrestrial radio access network (evolved universal terrestrial radio access network, E-UTRAN) - NR dual connectivity (E-UTRA-NR dual connectivity, EN-DC) architecture, an NR-E-UTRAN dual connectivity (NR-E-UTRAN dual connectivity, NE-DC) architecture and a next generation (next generation) E-UTRA-NR dual connectivity (NGEN-DC) architecture. EN-DC refers to dual connectivity between a 4G radio access network and 5G NR. The core network is a 4G core network, a primary station is an eNB, and a secondary station is a gNB. NE-DC refers to dual connectivity between 5G NR and a 4G radio access network. The core network is a 5G core network, the primary station is the gNB, and the secondary station is the eNB. NGEN-DC refers to dual connectivity between a 4G radio access network and 5G NR in a 5G core network. The core network is the 5G core network, the primary station is an upgraded 4G base station ng-eNB, and the secondary station is the gNB.

In DC scenarios, release (release/version) information supported by the primary station and the secondary station may be different. For example, in an EN-DC architecture, an LTE primary station and an NR secondary station have different upgrade progress within a period of time, and protocol releases supported by the primary station and the secondary station are usually different. In addition, releases of neighbor base stations to which one primary station can connect as potential secondary stations may also be different. In addition, even if neighbor base stations support the same release, specific features may be different. For example, neighbor secondary stations with different features such as UE power saving and packet data convergence protocol (Packet Data Convergence Protocol, PDCP) duplication (duplication) have different capabilities.

The background technology of this application has been introduced above, and technical features of the embodiments of this application are introduced below.

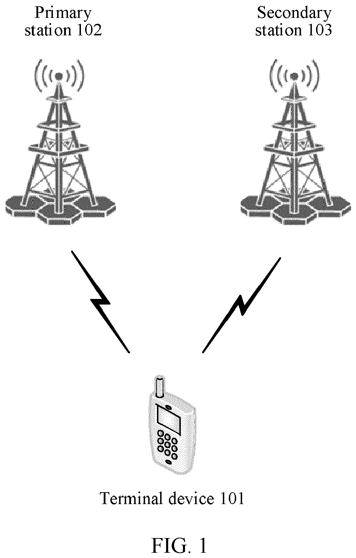

Refer to FIG. 1. FIG. 1 is a schematic diagram of a network system to which an embodiment of this application can be applied. As shown in FIG. 1, the network system is a network system in a DC scenario, including a terminal device 101, a primary station 102, and a secondary station 103. The terminal device 101 supports dual connectivity, and the terminal device 101 may separately establish a connection to the primary station 102 and the secondary station 103. The network system may be an EN-DC architecture, an NE-DC architecture, or an NGEN-DC architecture. When the network system is an EN-DC architecture, the primary station 102 is an eNB, and the secondary station 103 is a gNB. When the network system is an NE-DC architecture, the primary station 102 is a gNB, and the secondary station 103 is an eNB. When the network system is an NGEN-DC architecture, the primary station 102 is an ng-eNB, and the secondary station 103 is a gNB.

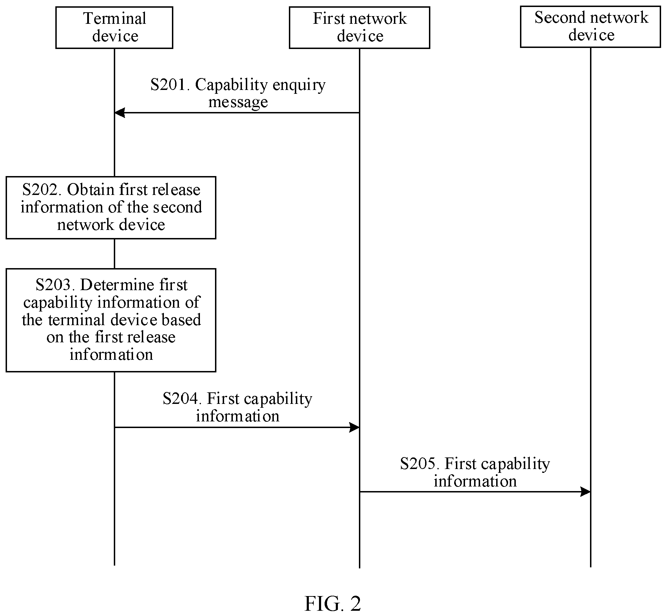

Refer to FIG. 2. FIG. 2 is a schematic diagram of an information reporting method according to an embodiment of this application. The information reporting method is applied to a network system in a DC scenario, for example, may be applied to the network system shown in FIG. 1. As shown in FIG. 2, the information reporting method includes the following steps.

S201. A terminal device receives a capability enquiry message from a first network device.

Optionally, the first network device sends the capability enquiry message to the terminal device, where the capability enquiry message includes first release information of a second network device. The first network device and the second network device are access network devices. The terminal device may separately establish a connection to the first network device and the second network device. The first network device is a primary station, and the second network device is a secondary station.

Optionally, the first network device sends the capability enquiry message to the terminal device, where the capability enquiry message carries first indication information, and the first indication information indicates the terminal device to determine first capability information of the terminal device based on the first release information of the second network device.

S202. The terminal device obtains the first release information of the second network device.

Optionally, the terminal device obtains the first release information from the capability enquiry message, where the capability enquiry message includes the first release information.

Optionally, the terminal device obtains the first release information from a first message.

In a possible implementation, the first message is a neighbor measurement configuration message, the neighbor measurement configuration message carries the first release information, and the neighbor measurement configuration message comes from the first network device.

In a possible implementation, the first message is a first system broadcast message, the first system broadcast message carries the first release information, and the first system broadcast message comes from the second network device.

In a possible implementation, the first message is a second system broadcast message, the second system broadcast message carries release information supported by the second network device, the second system broadcast message comes from the second network device, and the first release is one of releases supported by the second network device. The first release is a release indicated by the first release information, and the release supported by the second network device is a release that is indicated by the release information supported by the second network device.

Optionally, the release information in this embodiment of this application includes information about a protocol release or a standard release, and may be release information of a 3GPP standard, for example, release information of a 3GPP standard, including release 15 and release 16, or may be version information of a 3GPP standard, including 15.1.0, 16.2.0, etc.

Optionally, the release information further includes product release information, and the first release information of the second network device may be the product release information of the second network device. The product release information of a device refers to a code, model, or serial number for identifying the device, or may be a product code, model, or serial number of the device allocated based on specific criteria. For example, the product release information of the second network device may include manufacturer information of the second network device and information about a network or cell to which the second network device belongs. For example, the code of the second network device may be formed by combining an ID of the second network device manufacturer, a cell ID, and a software ID. This is only an example and does not limit specific composition of the product release information of the device.

S203. The terminal device determines the first capability information of the terminal device based on the first release information.

The first capability information determined by the terminal device based on the first release information does not exceed a capability corresponding to the first release information, the first capability information is corresponding to the first release information, and the first capability information is related to the second network device.

Optionally, the capability information in this embodiment of this application includes radio capability information and core network capability information, and the radio capability information includes a network standard and a frequency band that are supported by the terminal device.

Optionally, the first capability information further includes second release information supported by the terminal device, the second release is later than the first release, and a capability corresponding to the second release information is related to the secondary station. The first release is a release indicated by the first release information, and the second release is a release indicated by the second release information.

S204. The terminal device sends the first capability information to the first network device.

After receiving the first capability information, the first network device may transparently transmit the first capability information to the second network device without parsing the first capability information.

Optionally, the terminal device sends a neighbor cell measurement result to the first network device, where the neighbor cell measurement result includes the first release information.

Optionally, the terminal device obtains third release information of the first network device, and determines the second capability information of the terminal device based on the third release information. The terminal device sends the second capability information to the first network device, where the second capability information is related to the first network device.

Optionally, the terminal device obtains third release information of the first network device, and determines third capability information of the terminal device based on the first release information and the third release information. The terminal device sends the third capability information to the first network device, where the third capability information is related to the first network device.

S205. The first network device sends the first capability information to the second network device.

After the terminal device reports the first capability information to the first network device, the first network device sends the first capability information to the second network device, and the second network device parses the first capability information.

Optionally, the first capability information is transmitted via a secondary station addition request message. The first network device sends the secondary station addition request message to the second network device, where the secondary station addition request message carries the first capability information. The second network device sends a secondary station addition response message to the first network device. The first network device sends a radio resource control (radio resource control, RRC) reconfiguration message to the terminal device, to add the second network device as a secondary station.

In the foregoing method, the terminal device obtains the first release information of the second network device, determines the first capability information of the terminal device based on the first release information, and then sends the first capability information to the first network device. In this way, the first network device may send the first capability information to the second network device. The second network device receives the first capability information, and parses the first capability information. Because the first capability information is determined based on the first release information of the second network device, compatibility problems caused by capability misalignment between the terminal device and the second network device are avoided, compatibility between the terminal device and the network device is improved, and communication efficiency is improved.

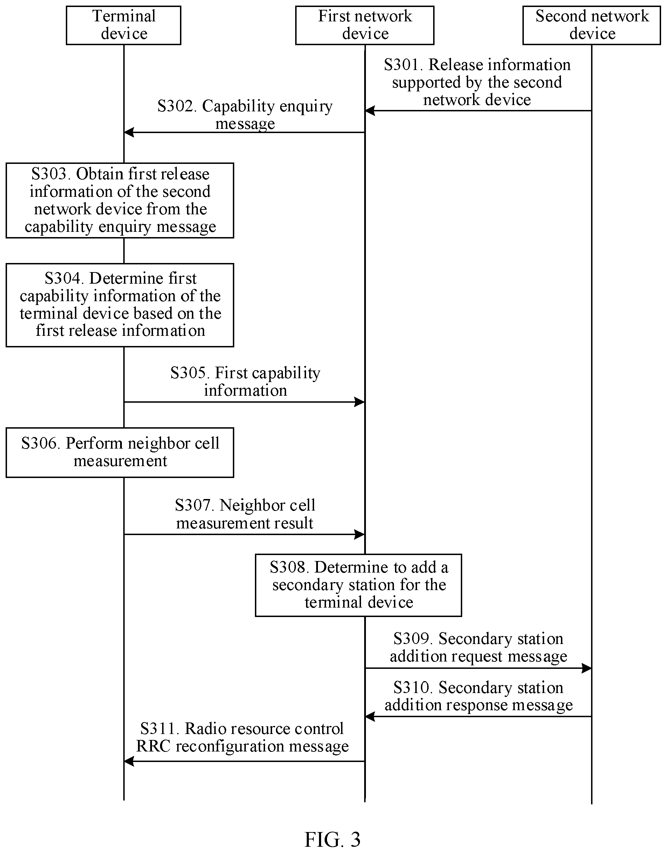

Refer to FIG. 3. FIG. 3 is a schematic diagram of another information reporting method according to an embodiment of this application. The information reporting method is applied to a network system in a DC scenario, for example, may be applied to the network system shown in FIG. 1. As shown in FIG. 3, the information reporting method includes the following steps.

S301. A second network device sends release information supported by the second network device to a first network device.

Specifically, the first network device performs capability interaction with a neighbor base station, and the first network device obtains the release information supported by the second network device. The first network device and the second network device are access network devices. A terminal device may separately establish a connection to the first network device and the second network device. In addition, the first network device is a primary station, and the second network device is a secondary station.

Optionally, the first network device may further receive other capability information of the second network device.

S302. The first network device sends a capability enquiry message to the terminal device.

Specifically, the first network device sends the capability enquiry message to the terminal device, where the capability enquiry message includes first release information of the second network device. The first release is one of the releases supported by the second network device. For example, the first release may be an earliest release or a latest release of the releases supported by the second network device. This is not limited herein. The first release is a release indicated by the first release information, and the release supported by the second network device is a release that is indicated by the release information supported by the second network device.

Optionally, the release information in this embodiment of this application includes information about a protocol release or a standard release. The release information also includes product release information.

S303. The terminal device obtains the first release information of the second network device from the capability enquiry message.

Specifically, the terminal device obtains the first release information from the capability enquiry message, where the capability enquiry message includes the first release information.

S304. The terminal device determines first capability information of the terminal device based on the first release information.

Specifically, the first capability information determined by the terminal device based on the first release information does not exceed a capability corresponding to the first release information, the first capability information is corresponding to the first release information, and the first capability information is related to the second network device.

Optionally, the capability information in this embodiment of this application includes radio capability information and core network capability information, and the radio capability information includes a network standard and a frequency band that are supported by the terminal device.

Optionally, the first capability information further includes second release information supported by the terminal device, the second release is later than the first release, and a capability corresponding to the second release information is related to the secondary station. The second release is a release indicated by the second release information.

S305. The terminal device sends the first capability information to the first network device.

After receiving the first capability information, the first network device may transparently transmit the first capability information to the second network device without parsing the first capability information.

Optionally, the terminal device obtains third release information of the first network device, and determines the second capability information of the terminal device based on the third release information. The terminal device sends the second capability information to the first network device, where the second capability information is related to the first network device.

Optionally, the terminal device obtains third release information of the first network device, and determines third capability information of the terminal device based on the first release information and the third release information. The terminal device sends the third capability information to the first network device, where the third capability information is related to the first network device.

S306. The terminal device performs neighbor cell measurement.

S307. The terminal device sends a neighbor cell measurement result to the first network device.

S308. The first network device determines to add a secondary station for the terminal device.

The first network device determines, based on the neighbor cell measurement result, to add the secondary station for the terminal device, and communicates with the secondary station.

S309. The first network device sends a secondary station addition request message to the second network device.

Specifically, the first network device sends the secondary station addition request message to the second network device, where the secondary station addition request message carries the first capability information.

S310. The second network device sends a secondary station addition response message to the first network device.

Specifically, the second network device parses the first capability information, and sends the secondary station addition response message to the first network device.

S311. The first network device sends an RRC reconfiguration message to the terminal device.

Specifically, the first network device receives the secondary station addition response message, and the first network device sends the RRC reconfiguration message to the terminal device, to add the second network device as the secondary station.

In the foregoing method, before a DC is established, the first network device obtains the first capability information of the terminal device, where the first capability information is determined based on the first release information of the second network device. When determining to establish the DC, the first network device sends the first capability information to the second network device. In this way, the second network device receives the first capability information, parses the first capability information, and adds the second network device as the secondary station. Because the first capability information is determined based on the first release information of the second network device, compatibility problems caused by capability misalignment between the terminal device and the second network device are avoided, compatibility between the terminal device and the network device is improved, and communication efficiency is improved.

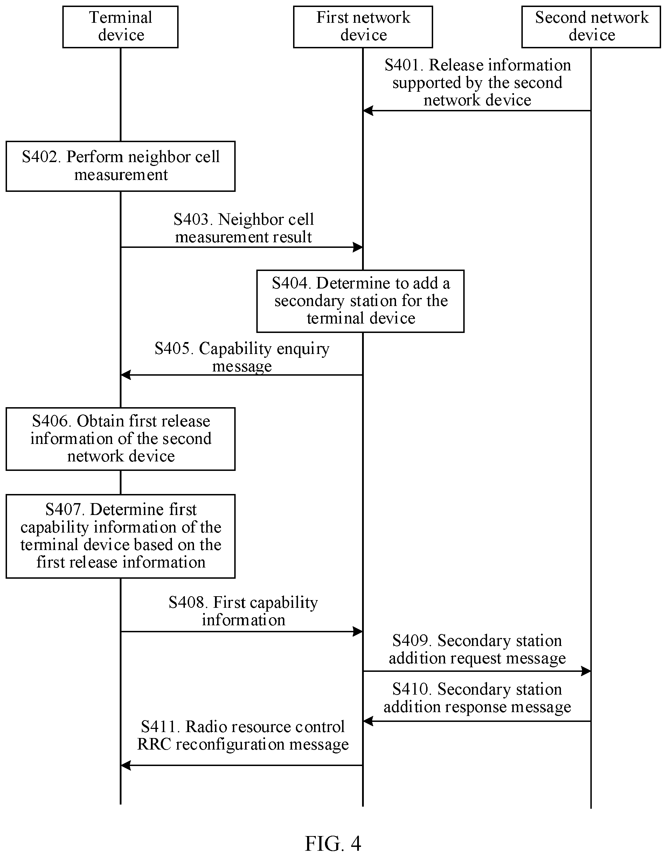

Refer to FIG. 4. FIG. 4 is a schematic diagram of another information reporting method according to an embodiment of this application. The information reporting method is applied to a network system in a DC scenario, for example, may be applied to the network system shown in FIG. 1. As shown in FIG. 4, the information reporting method includes the following steps.

S401. A second network device sends release information supported by the second network device to a first network device.

Specifically, the first network device performs capability interaction with a neighbor base station, and the first network device obtains the release information supported by the second network device. The first network device and the second network device are access network devices. A terminal device may separately establish a connection to the first network device and the second network device. In addition, the first network device is a primary station, and the second network device is a secondary station.

Optionally, the first network device may further receive other capability information of the second network device.

S402. The terminal device performs neighbor cell measurement.

S403. The terminal device sends a neighbor cell measurement result to the first network device.

S404. The first network device determines to add a secondary station for the terminal device.

Specifically, the first network device determines, based on the neighbor cell measurement result, to add the secondary station for the terminal device. Then, the first network device initiates a capability enquiry to the terminal device.

S405. The first network device sends a capability enquiry message to the terminal device.

Optionally, the first network device sends the capability enquiry message to the terminal device, where the capability enquiry message includes first release information of the second network device. The first release is one of the releases supported by the second network device. For example, the first release may be an earliest release or a latest release of the releases supported by the second network device. This is not limited herein. The first release is a release indicated by the first release information, and the release supported by the second network device is a release that is indicated by the release information supported by the second network device.

Optionally, the first network device sends the capability enquiry message to the terminal device, where the capability enquiry message carries first indication information, and the first indication information indicates the terminal device to determine first capability information of the terminal device based on the first release information of the second network device.

Optionally, the release information in this embodiment of this application includes information about a protocol release or a standard release. The release information also includes product release information.

S406. The terminal device obtains the first release information of the second network device.

Optionally, the terminal device obtains the first release information from the capability enquiry message, where the capability enquiry message includes the first release information.

Optionally, the terminal device obtains the first release information from a first message.

In a possible implementation, the first message is a neighbor measurement configuration message, the neighbor measurement configuration message carries the first release information, and the neighbor measurement configuration message comes from the first network device.

S407. The terminal device determines first capability information of the terminal device based on the first release information.

Specifically, the first capability information determined by the terminal device based on the first release information does not exceed a capability corresponding to the first release information, the first capability information is corresponding to the first release information, and the first capability information is related to the second network device.

Optionally, the capability information in this embodiment of this application includes radio capability information and core network capability information, and the radio capability information includes a network standard and a frequency band that are supported by the terminal device.

Optionally, the first capability information further includes second release information supported by the terminal device, the second release is later than the first release, and a capability corresponding to the second release information is related to the secondary station. The second release is a release indicated by the second release information.

In a possible implementation, the second release information may be release information supported by the terminal device for an EN-DC, an NE-DC, and/or an NGEN-DC.

S408. The terminal device sends the first capability information to the first network device.

After receiving the first capability information, the first network device may transparently transmit the first capability information to the second network device without parsing the first capability information.

Optionally, the terminal device obtains third release information of the first network device, and determines the second capability information of the terminal device based on the third release information. The terminal device sends the second capability information to the first network device, where the second capability information is related to the first network device.

Optionally, the terminal device obtains third release information of the first network device, and determines third capability information of the terminal device based on the first release information and the third release information. The terminal device sends the third capability information to the first network device, where the third capability information is related to the first network device.

S409. The first network device sends a secondary station addition request message to the second network device.

Specifically, the first network device sends the secondary station addition request message to the second network device, where the secondary station addition request message carries the first capability information.

S410. The second network device sends a secondary station addition response message to the first network device.

Specifically, the second network device parses the first capability information, and sends the secondary station addition response message to the first network device.

S411. The first network device sends an RRC reconfiguration message to the terminal device.

Specifically, the first network device receives the secondary station addition response message, and the first network device sends the RRC reconfiguration message to the terminal device, to add the second network device as the secondary station.

In the foregoing method, when determining to establish a DC, the first network device initiates the capability enquiry to the terminal device, and the first network device obtains the first capability information of the terminal device, where the first capability information is determined based on the first release information of the second network device. The first network device sends the first capability information to the second network device. In this way, the second network device receives the first capability information, parses the first capability information, and adds the second network device as the secondary station. Because the first capability information is determined based on the first release information of the second network device, compatibility problems caused by capability misalignment between the terminal device and the second network device are avoided, compatibility between the terminal device and the network device is improved, and communication efficiency is improved.

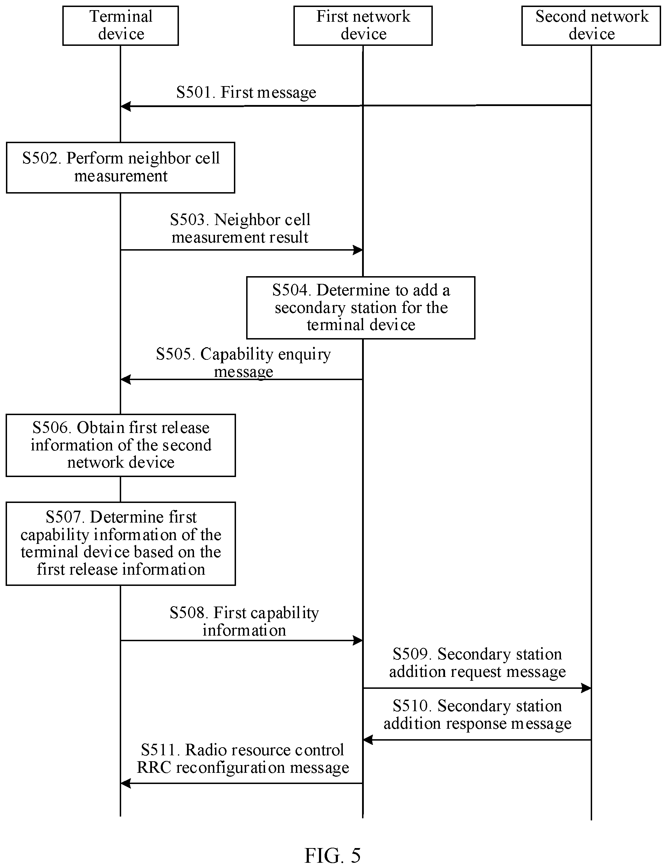

Refer to FIG. 5. FIG. 5 is a schematic diagram of another information reporting method according to an embodiment of this application. The information reporting method is applied to a network system in a DC scenario, for example, may be applied to the network system shown in FIG. 1. As shown in FIG. 5, the information reporting method includes the following steps.

S501. A second network device sends a first message to a terminal device.

Optionally, the first message is a first system broadcast message, the first system broadcast message carries first release information of the second network device, and the first system broadcast message comes from the second network device.

Optionally, the first message is a second system broadcast message, the second system broadcast message carries release information supported by the second network device, and the second system broadcast message comes from the second network device.

Optionally, the release information in this embodiment of this application includes information about a protocol release or a standard release. The release information also includes product release information.

S502. The terminal device performs neighbor cell measurement.

S503. The terminal device sends a neighbor cell measurement result to the first network device.

Optionally, the neighbor cell measurement result includes the first release information.

S504. The first network device determines to add a secondary station for the terminal device.

Specifically, the first network device determines, based on the neighbor cell measurement result, to add the secondary station for the terminal device. Then, the first network device initiates a capability enquiry to the terminal device.

S505. The first network device sends a capability enquiry message to the terminal device.

Specifically, the first network device sends the capability enquiry message to the terminal, where the capability enquiry message carries first indication information, and the first indication information indicates the terminal device to determine first capability information of the terminal device based on the first release information of the second network device. The first release is one of the releases supported by the second network device. For example, the first release may be an earliest release or a latest release of the releases supported by the second network device. This is not limited herein. The first release is a release indicated by the first release information, and the release supported by the second network device is a release that is indicated by the release information supported by the second network device.

S506. The terminal device obtains the first release information of the second network device.

Specifically, the terminal device obtains the first release information from the first message.

S507. The terminal device determines first capability information of the terminal device based on the first release information.

S508. The terminal device sends the first capability information to the first network device.

S509. The first network device sends a secondary station addition request message to the second network device.

S510. The second network device sends a secondary station addition response message to the first network device.

S511. The first network device sends an RRC reconfiguration message to the terminal device.

For steps S507 to S511, reference may be made to the foregoing steps S407 to S411. Details are not described herein again.

In the foregoing method, before the DC is established, the terminal device may obtain the first release information of the second network device via a system broadcast message. When determining to establish the DC, the first network device initiates the capability enquiry to the terminal device, and the first network device obtains the first capability information of the terminal device, where the first capability information is determined based on the first release information of the second network device. The first network device sends the first capability information to the second network device. In this way, the second network device receives the first capability information, parses the first capability information, and adds the second network device as the secondary station. Because the first capability information is determined based on the first release information of the second network device, compatibility problems caused by capability misalignment between the terminal device and the second network device are avoided, compatibility between the terminal device and the network device is improved, and communication efficiency is improved.

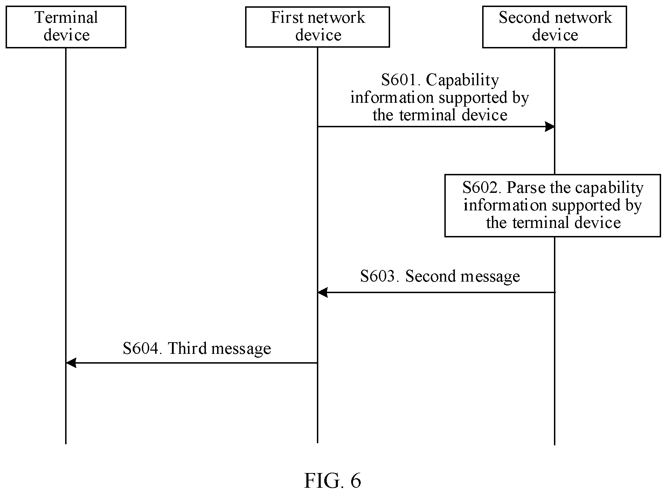

Refer to FIG. 6. FIG. 6 is a schematic diagram of another information reporting method according to an embodiment of this application. The information reporting method is applied to a network system in a DC scenario, for example, may be applied to the network system shown in FIG. 1. As shown in FIG. 6, the information reporting method includes the following steps.

S601. A second network device receives capability information that is supported by a terminal device and that is sent by a first network device.

Optionally, when reporting the capability information to the first network device, the terminal device may report the capability information that is supported by the terminal device in a form of a container (container). Then, the first network device stores the capability information that is supported by the terminal device. After the first network device determines to add a secondary station for the terminal device, the first network device sends, to the second network device, the capability information that is supported by the terminal device.

Optionally, the capability information in this embodiment of this application includes radio capability information and core network capability information, and the radio capability information includes a network standard and a frequency band that are supported by the terminal device.

S602. The second network device parses the capability information that is supported by the terminal device.

S603. The second network device sends a second message to the first network device.

Specifically, the second message includes fourth release information of the second network device, and the second message indicates the first network device to send a third message to the terminal device.

Optionally, the release information in this embodiment of this application includes information about a protocol release or a standard release. The release information also includes product release information.

S604. The first network device sends the third message to the terminal device.

Specifically, the third message includes the fourth release information.

Optionally, when the second network device successfully parses the capability information that is supported by the terminal device, the third message indicates the terminal device to establish a connection to the second network device based on the fourth release information.

Optionally, when the second network device fails to parse the capability information that is supported by the terminal device, the third message indicates the terminal device to determine fourth capability information based on the fourth release information. The fourth capability information determined by the terminal device based on the fourth release information does not exceed a capability corresponding to the fourth release information. In addition, the fourth capability information is corresponding to the fourth release information, and the fourth capability information is related to the second network device. The terminal device re-reports the fourth capability information.

In the foregoing method, the second network device receives the capability information that is supported by the terminal device, and parses the capability information that is supported by the terminal device. The first network device sends the third message to the terminal device, where the third message includes the fourth release information of the second network device. In this way, when the second network device successfully parses the capability information that is supported by the terminal device, the terminal device establishes a communication connection to the second network device based on the fourth release information; and when the parsing fails, the terminal device determines the fourth capability information based on the fourth release information, and reports the fourth capability information to the second network device. Because the fourth capability information is determined based on the fourth release information of the second network device, compatibility problems caused by capability misalignment between the terminal device and the second network device are avoided, compatibility between the terminal device and the network device is improved, and communication efficiency is improved.

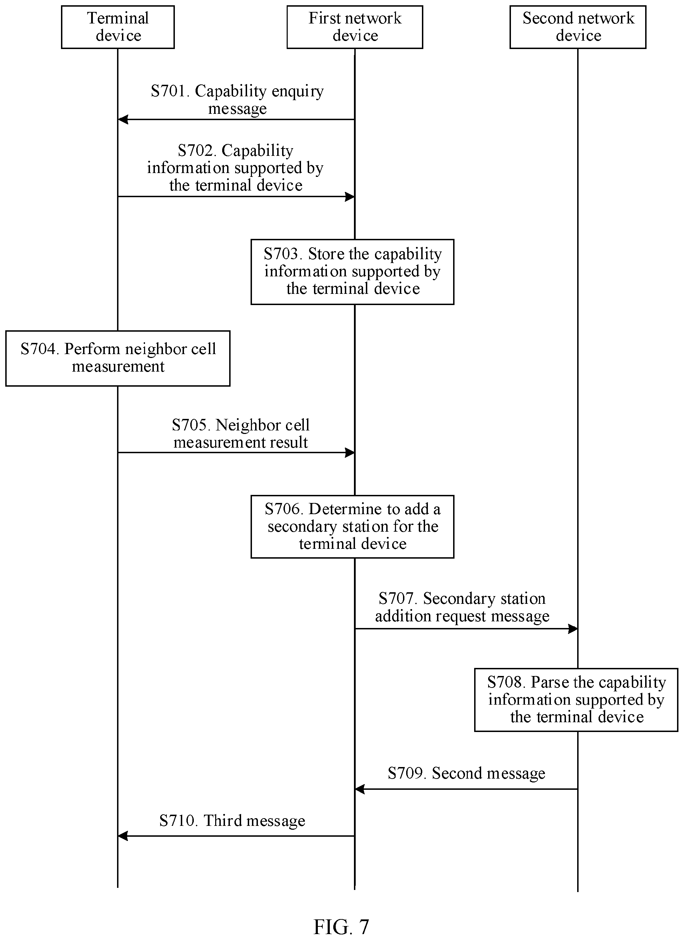

Refer to FIG. 7. FIG. 7 is a schematic diagram of another information reporting method according to an embodiment of this application. The information reporting method is applied to a network system in a DC scenario, for example, may be applied to the network system shown in FIG. 1. As shown in FIG. 7, the information reporting method includes the following steps.

S701. A first network device sends a capability enquiry message to a terminal device.

S702. The terminal device sends, to the first network device, capability information supported by the terminal device.

Optionally, when reporting the capability information to the first network device, the terminal device may report the capability information supported by the terminal device in a form of a container.

Optionally, the capability information in this embodiment of this application includes radio capability information and core network capability information, and the radio capability information includes a network standard and a frequency band that are supported by the terminal device.

S703. The first network device stores the capability information supported by the terminal device.

S704. The terminal device performs neighbor cell measurement.

S705. The terminal device sends a neighbor cell measurement result to the first network device.

S706. The first network device determines to add a secondary station for the terminal device.

The first network device determines, based on the neighbor cell measurement result, to add the secondary station for the terminal device, and communicates with the secondary station.

S707. The first network device sends a secondary station addition request message to the second network device.

Specifically, the first network device sends a secondary station addition request message to the second network device, where the secondary station addition request message carries the capability information supported by the terminal device.

S708. The second network device parses the capability information supported by the terminal device.

S709. The second network device sends a second message to the first network device.

Specifically, the second message includes fourth release information of the second network device, and the second message indicates the first network device to send a third message to the terminal device.

Optionally, the release information in this embodiment of this application includes information about a protocol release or a standard release. The release information also includes product release information.

In a possible implementation, the second message is a secondary station addition response message. When the second network device successfully parses the capability information supported by the terminal device, the secondary station addition response message carries the fourth release information.

In a possible implementation, the second message is a secondary station addition response message. When the second network device fails to parse the capability information supported by the terminal device, the secondary station addition response message carries the fourth release information and indication information indicating that the second network device fails to parse the capability information supported by the terminal device.

S710. The first network device sends the third message to the terminal device.

Specifically, the third message includes the fourth release information.

Optionally, when the second network device successfully parses the capability information that is supported by the terminal device, the third message indicates the terminal device to establish a connection to the second network device based on the fourth release information.

Optionally, when the second network device fails to parse the capability information that is supported by the terminal device, the third message indicates the terminal device to determine fourth capability information based on the fourth release information. The fourth capability information determined by the terminal device based on the fourth release information does not exceed a capability corresponding to the fourth release information. In addition, the fourth capability information is corresponding to the fourth release information, and the fourth capability information is related to the second network device. The terminal device re-reports the fourth capability information.

In a possible implementation, when the second network device successfully parses the capability information that is supported by the terminal device, the third message is an RRC reconfiguration message, and the RRC reconfiguration message includes the fourth release information. The RRC reconfiguration message indicates the terminal device to establish a connection to the second network device based on the fourth release information.

In a possible implementation, when the second network device fails to parse the capability information that is supported by the terminal device, the third message is an RRC reconfiguration message, and the RRC reconfiguration message includes the fourth release information. The RRC reconfiguration message indicates the terminal device to determine fourth capability information based on the fourth release information.

In a possible implementation, when the second network device fails to parse the capability information that is supported by the terminal device, the third message is a capability enquiry message, and the capability enquiry message includes the fourth release information. The capability enquiry message indicates the terminal device to determine fourth capability information based on the fourth release information.

In the foregoing method, when reporting a capability, the terminal device reports capability information that is actually supported by the terminal device. The second network device receives the capability information supported by the terminal device, and parses the capability information supported by the terminal device. If the parsing succeeds, the terminal device establishes a communication connection to the second network device based on the fourth release information of the second network device. If the parsing fails, the terminal device determines fourth capability information based on the fourth release information, and reports the fourth capability information to the second network device. Because the fourth capability information is determined based on the fourth release information of the second network device, compatibility problems caused by capability misalignment between the terminal device and the second network device are avoided, compatibility between the terminal device and the network device is improved, and communication efficiency is improved.

The above describes the information reporting method provided in the embodiments of this application, and a communication apparatus provided in the embodiments of this application will be described below.

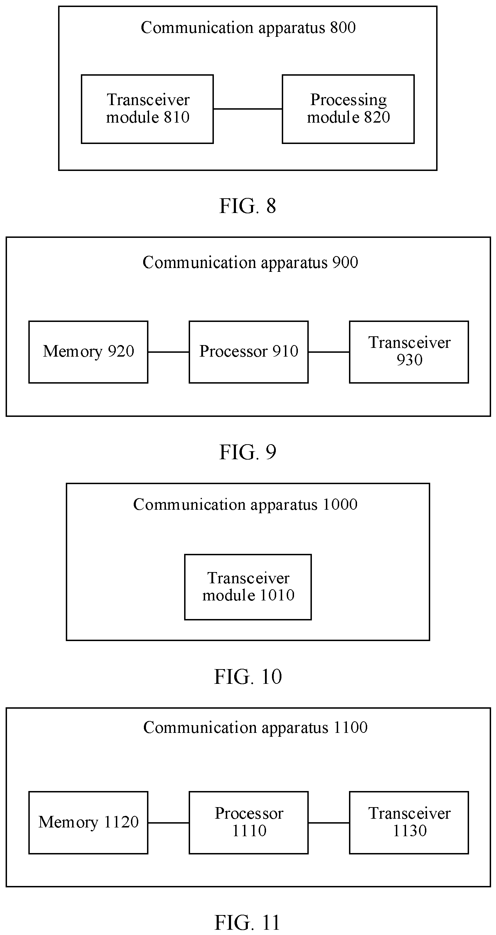

Refer to FIG. 8. FIG. 8 is a schematic diagram of a communication apparatus according to an embodiment of this application. The communication apparatus 800 is applied to a terminal device, and includes a transceiver module 810 and a processing module 820. The communication apparatus 800 may be a terminal device, or may be a chip or an integrated circuit inside the terminal device.

The transceiver module 810 is configured to receive a capability enquiry message from a first network device.

The processing module 820 is configured to: obtain first release information of a second network device, and determine first capability information of the terminal device based on the first release information.

The transceiver module 810 is further configured to send the first capability information to the first network device.

In embodiments of this application, the terminal device obtains the first release information of the second network device, determines the first capability information of the terminal device based on the first release information, and then sends the first capability information to the first network device. In this way, the first network device may send the first capability information to the second network device. The second network device receives the first capability information, and parses the first capability information. Because the first capability information is determined based on the first release information of the second network device, compatibility problems caused by capability misalignment between the terminal device and the second network device are avoided, compatibility between the terminal device and the network device is improved, and communication efficiency is improved.

Optionally, in an embodiment, the processing module 820 is further configured to: obtain the first release information from the capability enquiry message, where the capability enquiry message includes the first release information.

Optionally, in an embodiment, the processing module is specifically configured to: obtain the first release information from a first message; and where the capability enquiry message carries first indication information, and the first indication information indicates the terminal device to determine the first capability information based on the first release information.

Optionally, in an embodiment, the first message is a neighbor measurement configuration message, the neighbor measurement configuration message carries the first release information, and the neighbor measurement configuration message comes from the first network device. Alternatively, the first message is a first system broadcast message, the first system broadcast message carries the first release information, and the first system broadcast message comes from the second network device. Alternatively, the first message is a second system broadcast message, the second system broadcast message carries release information supported by the second network device, the second system broadcast message comes from the second network device, and the first release is one of releases supported by the second network device.

Optionally, in an embodiment, the first capability information further includes second release information supported by the terminal device, the second release is later than the first release, and a capability corresponding to the second release information is related to a secondary station.

Optionally, in an embodiment, the transceiver module 810 is further configured to send a neighbor cell measurement result to the first network device, where the neighbor cell measurement result includes the first release information.

Optionally, in an embodiment, the processing module 820 is further configured to obtain third release information of the first network device; and determine second capability information of the terminal device based on the third release information. The transceiver module 810 is further configured to send the second capability information to the first network device.

Optionally, in an embodiment, the processing module 820 is further configured to obtain third release information of the first network device; and determine third capability information of the terminal device based on the first release information and the third release information. The transceiver module 810 is further configured to send the third capability information to the first network device.

It should be understood that the processing module 820 in the embodiments of this application may be implemented by a processor or a processor-related circuit component, and the transceiver module 810 may be implemented by a transceiver or a transceiver-related circuit component.

Refer to FIG. 9. FIG. 9 is a schematic diagram of another communication apparatus according to an embodiment of this application. The communication apparatus 900 includes a processor 910, a memory 920, and a transceiver 930. The communication apparatus 900 may be a terminal device, or may be a chip or an integrated circuit in the terminal device. The memory 920 stores instructions or a program, and the processor 910 is configured to execute the instructions or the program stored in the memory 920. When the instructions or the program stored in the memory 920 is executed, the processor 910 is configured to perform an operation performed by the processing module 820 in the above embodiment, and the transceiver 930 is configured to perform an operation performed by the transceiver module 810 in the above embodiment.

It should be understood that the communication apparatus 800 or the communication apparatus 900 in the embodiments of this application may correspond to the terminal device in the information reporting method in the embodiments of this application. In addition, operations and/or functions of modules in the communication apparatus 800 or the communication apparatus 900 are separately used to implement corresponding procedures of the methods in FIG. 2 to FIG. 7. For brevity, details are not described herein again.

Refer to FIG. 10. FIG. 10 is a schematic diagram of another communication apparatus according to an embodiment of this application. The communication apparatus 1000 is applied to a first network device and includes a transceiver module 1010. The communication apparatus 1000 may be a network device, or may be a chip or an integrated circuit inside the network device, where
the transceiver module 1010 is configured to: send a capability enquiry message to a terminal device; and
receive first capability information sent by the terminal device, where the first capability information is determined based on first release information of a second network device, and the first capability information is related to the second network device; and
send the first capability information to the second network device.

In embodiments of this application, the first network device receives the first capability information sent by the terminal device, where the first capability information is determined based on the first release information of the second network device. Then, the first network device sends the first capability information to the second network device. In this way, the second network device receives the first capability information, and parses the first capability information. Because the first capability information is determined based on the first release information of the second network device, and the first capability information is related to the second network device, compatibility problems caused by capability misalignment between the terminal device and the second network device are avoided, compatibility between the terminal device and the network device is improved, and communication efficiency is improved.

Optionally, in an embodiment, the capability enquiry message includes the first release information.

Optionally, in an embodiment, the first release information is transmitted via a first message. The capability enquiry message carries first indication information, and the first indication information indicates the terminal device to determine the first capability information based on the first release information.

Optionally, in an embodiment, the first message is a neighbor measurement configuration message, the neighbor measurement configuration message carries the first release information, and the neighbor measurement configuration message comes from the first network device. Alternatively, the first message is a first system broadcast message, the first system broadcast message carries the first release information, and the first system broadcast message comes from the second network device. Alternatively, the first message is a second system broadcast message, the second system broadcast message carries release information supported by the second network device, the second system broadcast message comes from the second network device, and the first release is one of releases supported by the second network device.

Optionally, in an embodiment, the first capability information further includes second release information supported by the terminal device, the second release is later than the first release, and a capability corresponding to the second release information is related to a secondary station.

Optionally, in an embodiment, the transceiver module 1010 is further configured to receive a neighbor cell measurement result sent by the terminal device, where the neighbor cell measurement result includes the first release information.

Optionally, in an embodiment, the transceiver module 1010 is further configured to: Receive second capability information sent by the terminal device, where the second capability information is determined based on third release information of the first network device.

Optionally, in an embodiment, the transceiver module 1010 is further configured to: Receive third capability information sent by the terminal device, where the third capability information is determined based on the first release information and third release information of the first network device.

It should be understood that the transceiver module 1010 in the embodiments of this application may be implemented by a transceiver or a transceiver-related circuit component.

Refer to FIG. 11. FIG. 11 is a schematic diagram of another communication apparatus according to an embodiment of this application. The communication apparatus 1100 includes a processor 1110, a memory 1120, and a transceiver 1130. The communication apparatus 1100 may be a network device, or may be a chip or an integrated circuit inside the network device. The memory 1120 stores instructions or a program, and the processor 1110 is configured to execute the instructions or the program stored in the memory 1120. When the instructions or the program stored in the memory 1120 is executed, the transceiver 1130 is configured to perform an operation performed by the transceiver module 1010 in the above embodiment.

It should be understood that the communication apparatus 1000 or the communication apparatus 1100 in embodiments of this application may correspond to the first network device in the information reporting method in the embodiments of this application. In addition, operations and/or functions of modules in the communication apparatus 1000 or the communication apparatus 1100 are separately used to implement corresponding procedures of the methods in FIG. 2 to FIG. 7. For brevity, details are not described herein again.

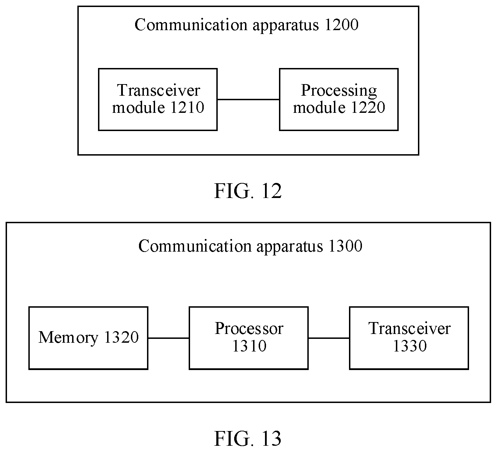

Refer to FIG. 12. FIG. 12 is a schematic diagram of another communication apparatus according to an embodiment of this application. The communication apparatus 1200 is applied to a second network device, and includes a transceiver module 1210 and a processing module 1220. The communication apparatus 1200 may be a network device, or may be a chip or an integrated circuit inside the network device, where
the transceiver module 1210 is configured to receive capability information that is supported by a terminal device and that is sent by a first network device;
the processing module 1220 is configured to parse the capability information that is supported by the terminal device; and
the transceiver module 1210 is further configured to send a second message to the first network device, where the second message includes fourth release information of the second network device, the second message indicates the first network device to send a third message to the terminal device, and the third message includes the fourth release information.

In embodiments of this application, the second network device receives the capability information supported by the terminal device, and parses the capability information supported by the terminal device. The first network device sends the third message to the terminal device, where the third message includes the fourth release information of the second network device. In this way, when the second network device successfully parses the capability information that is supported by the terminal device, the terminal device establishes a communication connection to the second network device based on the fourth release information; and when the parsing fails, the terminal device determines the fourth capability information based on the fourth release information, and reports the fourth capability information to the second network device. Because the fourth capability information is determined based on the fourth release information of the second network device, compatibility problems caused by capability misalignment between the terminal device and the second network device are avoided, compatibility between the terminal device and the network device is improved, and communication efficiency is improved.

Optionally, in an embodiment, when the second network device successfully parses the capability information that is supported by the terminal device, the third message indicates the terminal device to establish a connection to the second network device based on the fourth release information.

Optionally, in an embodiment, when the second network device fails to parse the capability information that is supported by the terminal device, the third message indicates the terminal device to determine fourth capability information based on the fourth release information.

It should be understood that the processing module 1220 in the embodiments of this application may be implemented by a processor or a processor-related circuit component, and the transceiver module 1210 may be implemented by a transceiver or a transceiver-related circuit component.

Refer to FIG. 13. FIG. 13 is a schematic diagram of another communication apparatus according to an embodiment of this application. The communication apparatus 1300 includes a processor 1310, a memory 1320, and a transceiver 1330. The communication apparatus 1300 may be a network device, or may be a chip or an integrated circuit inside the network device. The memory 1320 stores instructions or a program, and the processor 1310 is configured to execute the instructions or the program stored in the memory 1320. When the instructions or the program stored in the memory 1320 is executed, the processor 1310 is configured to perform an operation performed by the processing module 1220 in the above embodiment, and the transceiver 1330 is configured to perform an operation performed by the transceiver module 1210 in the above embodiment.

It should be understood that the communication apparatus 1200 or the communication apparatus 1300 in embodiments of this application may correspond to the second network device in the information reporting method in the embodiments of this application. In addition, operations and/or functions of modules in the communication apparatus 1200 or the communication apparatus 1300 are separately used to implement corresponding procedures of the methods in FIG. 2 to FIG. 7. For brevity, details are not described herein again.

Embodiments of this application further provide a computer-readable storage medium. The computer-readable storage medium stores a computer program. When the program is executed by a processor, a procedure related to the terminal device in the above method embodiments can be implemented.

Embodiments of this application further provide a computer-readable storage medium. The computer-readable storage medium stores a computer program. When the program is executed by a processor, a procedure related to the first network device in the above method embodiments can be implemented.

Embodiments of this application further provide a computer-readable storage medium. The computer-readable storage medium stores a computer program. When the program is executed by a processor, a procedure related to the second network device in the above method embodiments can be implemented.

Embodiments of this application further provide a computer program product. The computer program product, when run on a computer or a processor, causes the computer or the processor to perform one or more of the steps in the above method embodiments. If each of component module of the devices mentioned above is implemented in a form of a software functional unit and sold or used as an independent product, the component modules may be stored in the computer-readable storage medium.

Embodiments of this application further provide a communication system, including the terminal device, the first network device, and the second network device in the embodiments above.

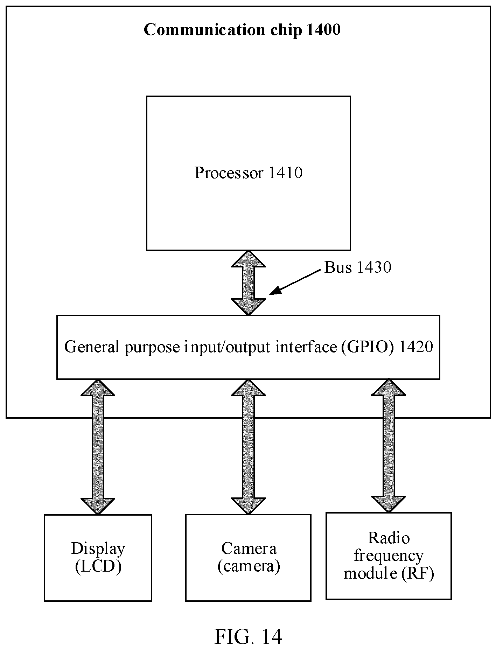

Refer to FIG. 14. FIG. 14 is a schematic structural diagram of a communication chip according to an embodiment of this application. As shown in FIG. 14, the communication chip 1400 may include: A processor 1410, and one or more interfaces 1420 coupled to the processor 1410. An example is as follows:
The processor 1410 may be configured to read and execute computer-readable instructions. During a specific implementation, the processor 1410 may mainly include a controller, a calculator, and a register. For example, the controller is mainly responsible for instruction decoding, and transmitting a control signal for an operation corresponding to the instructions. The calculator is mainly responsible for performing fixed-point or floating-point arithmetic operations, shift operations, logical operations, and the like, and may also perform address operations and translations. The register is mainly responsible for storing register operands and intermediate operation results that are temporarily stored during instruction execution. In a specific implementation, a hardware architecture of the processor 1410 may be an application-specific integrated circuit (application specific integrated circuit, ASIC) architecture, a microprocessor without interlocked piped stages (microprocessor without interlocked piped stages architecture, MIPS) architecture, an advanced reduced instruction set computing machines (advanced RISC machines, ARM) architecture, an NP architecture, or the like. Optionally, the processor 1410 may be single-core, or may be multi-core.

For example, the interface 1420 may be configured to input to-be-processed data to the processor 1410, and may outwardly output a processing result of the processor 1410. In a specific implementation, the interface 1420 may be a general purpose input output (general purpose input output, GPIO) interface, and may be connected to a plurality of peripheral devices (for example, a display (LCD), a camera (camera), and a radio frequency (radio frequency, RF) module). The interface 1420 is connected to the processor 1410 via a bus 1430.

In a possible implementation, the processor 1410 may be configured to invoke, from the memory, an implementation program or data of the information reporting method provided in one or more embodiments of this application on a side of the terminal device, the first network device, or the second network device, so that the chip can implement the information reporting method in the embodiments above. The memory may be integrated with the processor 1410, or may be coupled to the communication chip 1400 via the interface 1420. In other words, the memory may be part of the communication chip 1400, or may be independent of the communication chip 1400. The interface 1420 may be configured to output an execution result of the processor 1410. In this application, the interface 1420 may be further configured to output a decoding result of the processor 1410. The information reporting method provided in one or more embodiments of this application can refer to the embodiments above. Details are not described herein again.

It should be noted that functions corresponding to the processor 1410 and the interface 1420 may be achieved through hardware design, software design, or a combination of software and hardware. This is not limited herein.

It should also be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The communication interface mentioned in embodiments of this application may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be, for example, a WLAN interface.

It should be noted that, when the processor is a general purpose processor, a DSP, an ASIC, an FPGA or another programmable logic device, a discrete gate or a transistor logic device, or a discrete hardware component, a memory (storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: various media that can store a program code, such as a USB flash disk, a removable hard disk, a read-only memory (read-only memory, ROM), a random access memory (random access memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information reporting method, comprising:
receiving, by a terminal device, a capability enquiry message from a first network device, and obtaining first release information of a second network device;
determining, by the terminal device, first capability information of the terminal device based on the first release information; and
sending, by the terminal device, the first capability information to the first network device.

2. The method according to claim 1, wherein the obtaining first release information of a second network device comprises:
obtaining the first release information from the capability enquiry message, wherein the capability enquiry message comprises the first release information.

3. The method according to claim 1, wherein the obtaining first release information of a second network device comprises:
obtaining the first release information from a first message; wherein the capability enquiry message carries first indication information, and the first indication information indicates the terminal device to determine the first capability information based on the first release information.

4. The method according to claim 3, wherein the first message is a neighbor measurement configuration message, the neighbor measurement configuration message carries the first release information, and the neighbor measurement configuration message comes from the first network device; or
the first message is a first system broadcast message, the first system broadcast message carries the first release information, and the first system broadcast message comes from the second network device; or
the first message is a second system broadcast message, the second system broadcast message carries release information supported by the second network device, the second system broadcast message comes from the second network device, and the first release is one of releases supported by the second network device.

5. The method according to any one of claims 1 to 4, wherein the first capability information further comprises second release information supported by the terminal device, the second release is later than the first release, and a capability corresponding to the second release information is related to a secondary station.

6. The method according to any one of claims 1 to 5, wherein the method further comprises:
sending, by the terminal device, a neighbor cell measurement result to the first network device, wherein the neighbor cell measurement result comprises the first release information.

7. The method according to any one of claims 1 to 6, wherein the method further comprises:
obtaining, by the terminal device, third release information of the first network device;
determining, by the terminal device, second capability information of the terminal device based on the third release information; and
sending, by the terminal device, the second capability information to the first network device.

8. The method according to any one of claims 1 to 6, wherein the method further comprises:
obtaining, by the terminal device, third release information of the first network device;
determining, by the terminal device, third capability information of the terminal device based on the first release information and the third release information; and
sending, by the terminal device, the third capability information to the first network device.

9. An information reporting method, comprising:
sending, by a first network device, a capability enquiry message to a terminal device;
receiving, by the first network device, first capability information sent by the terminal device, wherein the first capability information is determined based on first release information of a second network device, and the first capability information is related to the second network device; and
sending, by the first network device, the first capability information to the second network device.

10. The method according to claim 9, wherein the capability enquiry message comprises the first release information.

11. The method according to claim 9, wherein the first release information is transmitted via a first message; and the capability enquiry message carries first indication information, and the first indication information indicates the terminal device to determine the first capability information based on the first release information.

12. The method according to claim 11, wherein the first message is a neighbor measurement configuration message, the neighbor measurement configuration message carries the first release information, and the neighbor measurement configuration message comes from the first network device; or
the first message is a first system broadcast message, the first system broadcast message carries the first release information, and the first system broadcast message comes from the second network device; or
the first message is a second system broadcast message, the second system broadcast message carries release information supported by the second network device, the second system broadcast message comes from the second network device, and the first release is one of releases supported by the second network device.

13. The method according to any one of claims 9 to 12, wherein the first capability information further comprises second release information supported by the terminal device, the second release is later than the first release, and a capability corresponding to the second release information is related to a secondary station.

14. The method according to any one of claims 9 to 13, wherein the method further comprises:
receiving, by the first network device, a neighbor cell measurement result sent by the terminal device, wherein the neighbor cell measurement result comprises the first release information.

15. The method according to any one of claims 9 to 14, wherein the method further comprises:
receiving, by the first network device, second capability information sent by the terminal device, wherein the second capability information is determined based on third release information of the first network device.

16. The method according to any one of claims 9 to 14, wherein the method further comprises:
receiving, by the first network device, third capability information sent by the terminal device, wherein the third capability information is determined based on the first release information and third release information of the first network device.

17. An information reporting method, comprising:
receiving, by a second network device, capability information that is supported by a terminal device and that is sent by a first network device;
parsing, by the second network device, the capability information that is supported by the terminal device; and
sending, by the second network device, a second message to the first network device, wherein the second message comprises fourth release information of the second network device, the second message indicates the first network device to send a third message to the terminal device, and the third message comprises the fourth release information.

18. The method according to claim 17, wherein when the second network device successfully parses the capability information that is supported by the terminal device, the third message indicates the terminal device to establish a connection to the second network device based on the fourth release information.

19. The method according to claim 17, wherein when the second network device fails to parse the capability information that is supported by the terminal device, the third message indicates the terminal device to determine fourth capability information based on the fourth release information.

20. A communication apparatus, wherein the communication apparatus is used in a terminal device, and comprises a transceiver module and a processing module, wherein
the transceiver module is configured to receive a capability enquiry message from a first network device;
the processing module is configured to obtain first release information of a second network device, and determine first capability information of the terminal device based on the first release information; and
the transceiver module is further configured to send the first capability information to the first network device.

21. The communication apparatus according to claim 20, wherein the processing module is specifically configured to:
obtain the first release information from the capability enquiry message, wherein the capability enquiry message comprises the first release information.

22. The communication apparatus according to claim 20, wherein the processing module is specifically configured to:
obtain the first release information from a first message; wherein the capability enquiry message carries first indication information, and the first indication information indicates the terminal device to determine the first capability information based on the first release information.

23. The communication apparatus according to claim 22, wherein the first message is a neighbor measurement configuration message, the neighbor measurement configuration message carries the first release information, and the neighbor measurement configuration message comes from the first network device; or
the first message is a first system broadcast message, the first system broadcast message carries the first release information, and the first system broadcast message comes from the second network device; or
the first message is a second system broadcast message, the second system broadcast message carries release information supported by the second network device, the second system broadcast message comes from the second network device, and the first release is one of releases supported by the second network device.

24. The communication apparatus according to any one of claims 20 to 23, wherein the first capability information further comprises second release information supported by the terminal device, the second release is later than the first release, and a capability corresponding to the second release information is related to a secondary station.

25. The communication apparatus according to any one of claims 20 to 24, wherein the transceiver module is further configured to:
send a neighbor cell measurement result to the first network device, wherein the neighbor cell measurement result comprises the first release information.

26. The communication apparatus according to any one of claims 20 to 25, wherein the processing module is further configured to obtain third release information of the first network device; and determine second capability information of the terminal device based on the third release information; and the transceiver module is further configured to send the second capability information to the first network device.

27. The communication apparatus according to any one of claims 20 to 25, wherein the processing module is further configured to obtain third release information of the first network device; and determine third capability information of the terminal device based on the first release information and the third release information; and the transceiver module is further configured to send the third capability information to the first network device.

28. A communication apparatus, wherein the communication apparatus is used in a first network device, and comprises a transceiver module, wherein the transceiver module is configured to:
send a capability enquiry message to a terminal device;
receive first capability information sent by the terminal device, wherein the first capability information is determined based on first release information of a second network device, and the first capability information is related to the second network device; and
send the first capability information to the second network device.

29. The communication apparatus according to claim 28, wherein the capability enquiry message comprises the first release information.

30. The communication apparatus according to claim 28, wherein the first release information is transmitted via a first message; and the capability enquiry message carries first indication information, and the first indication information indicates the terminal device to determine the first capability information based on the first release information.

31. The communication apparatus according to claim 30, wherein the first message is a neighbor measurement configuration message, the neighbor measurement configuration message carries the first release information, and the neighbor measurement configuration message comes from the first network device; or
the first message is a first system broadcast message, the first system broadcast message carries the first release information, and the first system broadcast message comes from the second network device; or
the first message is a second system broadcast message, the second system broadcast message carries release information supported by the second network device, the second system broadcast message comes from the second network device, and the first release is one of releases supported by the second network device.

32. The communication apparatus according to any one of claims 28 to 31, wherein the first capability information further comprises second release information supported by the terminal device, the second release is later than the first release, and a capability corresponding to the second release information is related to a secondary station.

33. The communication apparatus according to any one of claims 28 to 32, wherein the transceiver module is further configured to:
receive a neighbor cell measurement result sent by the terminal device, wherein the neighbor cell measurement result comprises the first release information.

34. The communication apparatus according to any one of claims 28 to 33, wherein the transceiver module is further configured to:
receive second capability information sent by the terminal device, wherein the second capability information is determined based on third release information of the first network device.

35. The communication apparatus according to any one of claims 28 to 33, wherein the transceiver module is further configured to:
receive third capability information sent by the terminal device, wherein the third capability information is determined based on the first release information and third release information of the first network device.

36. A communication apparatus, wherein the communication apparatus is used in a second network device, and comprises a transceiver module and a processing module, wherein
the transceiver module is configured to receive capability information that is supported by a terminal device and that is sent by a first network device;
the processing module is configured to parse the capability information that is supported by the terminal device; and
the transceiver module is further configured to send a second message to the first network device, wherein the second message comprises fourth release information of the second network device, the second message indicates the first network device to send a third message to the terminal device, and the third message comprises the fourth release information.

37. The communication apparatus according to claim 36, wherein when the second network device successfully parses the capability information that is supported by the terminal device, the third message indicates the terminal device to establish a connection to the second network device based on the fourth release information.

38. The communication apparatus according to claim 36, wherein when the second network device fails to parse the capability information that is supported by the terminal device, the third message indicates the terminal device to determine fourth capability information based on the fourth release information.

39. A communication apparatus, comprising a memory, a processor, and a program that is stored in the memory and that is executable on the processor, and when executing the program, the processor implements the method according to any one of claims 1 to 8, or any one of claims 9 to 16, or any one of claims 17 to 19.

40. A computer-readable storage medium, wherein the computer-readable storage medium stores a computer program, the computer program comprises program instructions, and when being executed by a processor, the program instructions enable the processor to perform the method according to any one of claims 1 to 8, or any one of claims 9 to 16, or any one of claims 17 to 19.
